(19) **Europäisches Patentamt**
**European Patent Office**
**Office européen des brevets**

(11) **EP 2 988 969 B1**

(12) **FASCICULE DE BREVET EUROPEEN**

(45) Date de publication et mention
de la délivrance du brevet:
**05.04.2017 Bulletin 2017/14**

(21) Numéro de dépôt: **14722284.8**

(22) Date de dépôt: **17.04.2014**

(51) Int Cl.:
*B60L 15/20* (2006.01)       *H02P 21/22* (2016.01)
*H02P 27/00* (2006.01)       *H02P 21/00* (2016.01)

(86) Numéro de dépôt international:
**PCT/FR2014/050938**

(87) Numéro de publication internationale:
**WO 2014/174186 (30.10.2014 Gazette 2014/44)**

(54) **CARTOGRAPHIES DE COURANTS MOTEUR**

MOTORSTROMKARTIERUNG

MOTOR CURRENT MAPPING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.04.2013 FR 1353741**

(43) Date de publication de la demande:
**02.03.2016 Bulletin 2016/09**

(73) Titulaire: **Renault S.A.S.**
**92100 Boulogne-Billancourt (FR)**

(72) Inventeurs:
• **DOC, Caroline**
**F-78370 Plaisir (FR)**
• **BAUMANN, Thibaut**
**F-78350 Jouy en Josas (FR)**

(56) Documents cités:
**JP-A- 2004 080 896       US-A1- 2010 253 252
US-B1- 6 329 781**

**Description**

L'invention a pour objet les véhicules à moteur électrique. Elle peut s'appliquer par exemple aux véhicules à propulsion tout électrique ou aux véhicules hybrides, et en particulier aux véhicules mus par un moteur électrique synchrone à rotor bobiné. De tels moteurs électriques, également désignés par machines électriques, sont alimentés en courant électrique à la tension disponible sur la batterie du véhicule, avec des valeurs d'intensité de courant qui sont des signaux périodiques dont l'amplitude et les déphasages sont calculés à partir de trois consignes $I_f$, $I_d$ et $I_q$ homogènes chacune à une intensité de courant. Ces trois valeurs de consigne sont cartographiées en fonction de trois paramètres, qui sont généralement le couple souhaité au niveau du moteur électrique, la vitesse de rotation du moteur électrique et la tension aux bornes de la batterie alimentant le moteur.

Afin de limiter l'espace mémoire nécessaire pour enregistrer les cartographies de chacune des intensités de consigne, on utilise des cartographies en deux dimensions, chacune des cartographies en deux dimensions étant associée à une valeur de tension constante.

A un niveau de tension de la batterie, on peut associer une cartographie reliant une des trois consignes $I_f$, $I_d$ ou $I_q$, en fonction du couple et de la vitesse de rotation du moteur. On dispose sur le véhicule de plusieurs cartographies "embarquées" de cette valeur de consigne, par exemple $I_f$, chaque cartographie correspondant à un niveau différent de tension de batterie. Les niveaux de tension correspondant aux cartographies embarquées sont parfois désignés par le terme « break point », pour distinguer ces niveaux de tension de valeurs de tension qui peuvent par ailleurs faire l'objet de cartographies qui ne sont, elles, pas embarquées sur le véhicule, afin d'économiser de l'espace mémoire.

Lorsque la tension de la batterie correspond à une des tensions de « break point », une unité de commande électronique recherche dans l'une des cartographies embarquées la consigne d'intensité correspondante.

Au fur et à mesure que la tension de la batterie diminue, certains domaines correspondant aux régimes élevés de rotation du moteur et aux couples élevés du moteur ne sont plus accessibles en pratique. Ces zones peuvent être considérées comme des zones interdites des cartographies embarquées.

Pour un point de fonctionnement (couple, régime) donné et une tension ne correspondant pas à une tension de breakpoint, l'unité de commande électronique calcule l'intensité de consigne en effectuant une interpolation à partir de deux valeurs d'intensité cartographiées pour le même point de fonctionnement, à deux niveaux de tension de breakpoint de part et d'autre de la tension recherchée. Cependant, quand le point de fonctionnement (couple, régime) se trouve dans une zone interdite d'une des deux cartographies utilisées, typiquement dans une zone interdite de la cartographie de niveau de tension la plus basse, on ne peut alors pas effectuer l'interpolation. Pourtant, le point de fonctionnement (couple, régime) peut être accessible physiquement avec une consigne adaptée à la tension recherchée. Ce mode de gestion des cartographies amène donc à limiter indûment les zones de l'espace (couple, régime, tension) que l'on autorise pour le fonctionnement du moteur. On est alors amené à limiter indûment le couple moteur que le conducteur peut exiger quand la tension aux bornes de la batterie diminue. Des valeurs de couple plus élevées seraient accessibles si l'on utilisait un réseau de cartographies plus dense selon l'axe des tensions.

L'invention a pour but de proposer un système de gestion du moteur électrique qui est économe en place mémoire, tout en permettant d'exploiter au mieux les couples maximaux disponibles, pour chaque tension de la batterie, au niveau du moteur.

A cette fin, l'invention propose une machine électrique associée à une unité de commande électronique comprenant un groupe de cartographies embarquées d'un même paramètre de consigne en fonction d'une première grandeur et d'une seconde grandeur de fonctionnement de la machine, chacune des cartographies étant enregistrée sur le même domaine de variation des deux grandeurs, chacune des cartographies étant associée à un niveau différent d'un troisième paramètre de fonctionnement de la machine électrique, les cartographies comprenant des plages de valeurs ayant au moins deux types de statut différents, soit des plages de valeurs autorisées, et au moins une plage de valeurs extrapolées pour au moins une des cartographies. L'unité de commande électronique est configurée, quand la valeur de troisième paramètre est associée à une des cartographies embarquées, pour utiliser comme valeur de consigne des valeurs appartenant aux plages autorisées à l'exclusion des valeurs appartenant aux plages extrapolées. L'unité de commande électronique est configurée, pour des valeurs du troisième paramètre non associées à une des cartographies embarquées, pour utiliser des valeurs interpolées entre deux valeurs autorisées, ou entre une valeur autorisée et une valeur extrapolée.

Les cartographies peuvent éventuellement aussi comporter des plages interdites du domaine de points de fonctionnement, pour lesquelles la valeur du paramètre de consigne n'est jamais utilisée, ni directement, ni par interpolation. Dans ces plages interdites, la valeur attribuée au paramètre de consigne peut être aléatoire ou indéfinie. Pour une valeur de troisième paramètre intermédiaire entre deux cartographies disponibles, l'interpolation se fait par rapport au troisième paramètre. L'interpolation se fait entre deux valeurs issues des deux cartographies et associées à un même point de fonctionnement. L'interpolation est toujours effectuée suivant la même formule d'interpolation, au moins entre deux niveaux donnés du troisième paramètre.

Les cartographies utilisées pour l'interpolation sont celles dont les valeurs de troisième paramètre sont les plus proches de la valeur de troisième paramètre recherchée.

Selon un autre aspect, l'invention propose un procédé de pilotage d'une machine électrique. Le pilotage se fait à l'aide d'un groupe de cartographies permettant de connaître un même paramètre de consigne en fonction d'une première grandeur et d'une seconde grandeur définissant un point de fonctionnement de la machine électrique. Chacune des cartographies est enregistrée sur le même domaine de variation des deux grandeurs, et est associée à un niveau différent d'un troisième paramètre de fonctionnement de la machine. On interdit l'utilisation d'un sous groupe spécifique de valeurs cartographiées comme valeurs de consigne, mais on utilise cependant ce sous groupe spécifique pour calculer des valeurs de consigne interpolées entre un point du sous groupe spécifique et une seconde valeur d'une cartographie voisine n'appartenant pas à un des sous groupes spécifiques.

Selon un mode de réalisation préférentiel, on définit les cartographies embarquées en sélectionnant un nombre limité de cartographies de référence parmi un jeu plus large de cartographies disponibles, dont on complète ou modifie certaines portions , de manière à ce qu'en effectuant, par la suite, des interpolations entre une portion modifiée d'une première cartographie embarquée et une portion non modifiée d'une seconde cartographie embarquée, on retrouve au moins une portion d'une des cartographies disponibles non embarquées. Les portions modifiées correspondent aux sous groupes spécifiques de valeurs cartographiées.

Selon un mode de réalisation avantageux, on complète les cartographies de référence de manière à ce que le résultat de l'interpolation corresponde à une portion de la cartographie non embarquée qui est la plus proche, selon le troisième paramètre, de la cartographie complétée utilisée pour l'interpolation. Par cartographie la plus proche, on entend bien sûr la cartographie la plus proche dans laquelle le point de fonctionnement recherché est défini, en excluant les autres cartographies intermédiaires dans lesquelles le point de fonctionnement ne serait pas défini, ou ferait partie d'une zone interdite à l'usage.

En d'autres termes, on complète au moins une cartographie de référence pour obtenir une cartographie embarquée plus complète, en extrapolant pour chaque point à compléter, à partir des valeurs d'une autre cartographie de référence et d'une autre cartographie non embarquée qui sont respectivement la cartographie de référence et la cartographie non embarquée les plus proches, selon le troisième paramètre (V), de la cartographie à compléter, de manière cependant à ce que le point de fonctionnement (N, C) à compléter soit compris dans une plage de valeurs autorisée de la cartographie non embarquée . Le point de fonctionnement (N, C) à compléter doit bien sûr également être compris dans une plage de valeurs autorisée de la cartographie de référence.

Selon un mode de réalisation préféré, on procède de même pour toutes les cartographies qui peuvent être ainsi complétées.

Une cartographie est a priori plus proche qu'une autre, selon le troisième paramètre, de la cartographie à compléter, si les contours des zones interdites respectives sont plus proches. En pratique, pour chaque point de fonctionnement (N,C) à compléter, on choisit, pour l'extrapolation, un point d'une cartographie non embarquée dont la zone interdite est la plus proche du couple (N,C) correspondant, sans toutefois inclure le point de fonctionnement.

Avantageusement, sur un domaine de points de fonctionnement qui ne sont cartographiés dans aucune des cartographies disponibles comprises entre la cartographie embarquée à compléter et la plus proche cartographie embarquée, on attribue aux points de fonctionnement du domaine une ou des valeurs virtuelles de consigne égales à une ou des valeurs de consigne de la même cartographie, correspondant à des points de la frontière du domaine. Les points de la frontière utilisés peuvent eux-mêmes être des points extrapolés. La plus proche cartographie embarquée s'entend comme la plus proche tout en étant située du côté de la cartographie à modifier permettant par la suite d'effectuer des interpolations entre les deux cartographies, c'est-à-dire celle des cartographies immédiatement voisines présentant un domaine plus réduit de points de fonctionnements interdits.

On peut par exemple compléter au moins une zone d'une des cartographies embarquées en traçant une série de lignes de niveau de valeurs constantes à partir de points de la frontière de la zone.

De manière préférentielle, les lignes de niveau sont parallèles à un axe correspondant à la première grandeur ou à un axe correspondant à la seconde grandeur.

Selon un mode de mise en oeuvre particulièrement intéressant, la première et la seconde grandeurs sont proportionnelles à la vitesse de rotation et au couple de la machine électrique, et le troisième paramètre est proportionnel à une tension de batterie. Le paramètre de consigne cartographié est utilisé pour calculer une consigne d'intensité de courant du stator ou du rotor de la machine électrique.

Dans ce mode de réalisation, quand on utilise le sous groupe spécifique de valeurs cartographiées pour une interpolation, l'interpolation est effectuée entre une valeur de tension supérieure d'une portion non modifiée de cartographie, et une valeur de tension inférieure d'une portion modifiée de cartographie.

Selon un mode de réalisation avantageux, on n'autorise l'utilisation d'une valeur appartenant au sous groupe spécifique de valeurs cartographiées pour une interpolation, que si la tension pour laquelle on souhaite déterminer une valeur de consigne est supérieure ou égale à une tension seuil. Les tensions seuil peuvent être cartographiées en fonction des points de fonctionnement de la machine électrique et en fonction de la tension d'une des cartographies utilisées pour l'interpolation.

On peut en particulier utiliser le procédé pour calculer une consigne d'intensité de courant de rotor (ou courant direct ou courant d'excitation), une consigne d'intensité de courant de stator (ou courant de quadrature) et/ou une consigne d'intensité de courant stator (selon l'axe dit direct) dans une machine électrique synchrone, par exemple à rotor bobiné.

D'autres buts, caractéristiques et avantages de l'invention apparaîtront à la lecture de la description suivante donnée uniquement à titre d'exemple non limitatif, et faite en référence aux dessins annexés, sur lesquels :

- la figure 1 représente un véhicule équipé d'un système de gestion de moteur électrique selon l'invention,
- la figure 2 représente de manière schématique un mode de construction des cartographies utilisées dans le véhicule de la figure 1,
- la figure 3 est un algorithme simplifié de calcul de certains des points des cartographies de la figure 2,
- la figure 4 illustre en relief une cartographie similaire à celle de la figure 2.

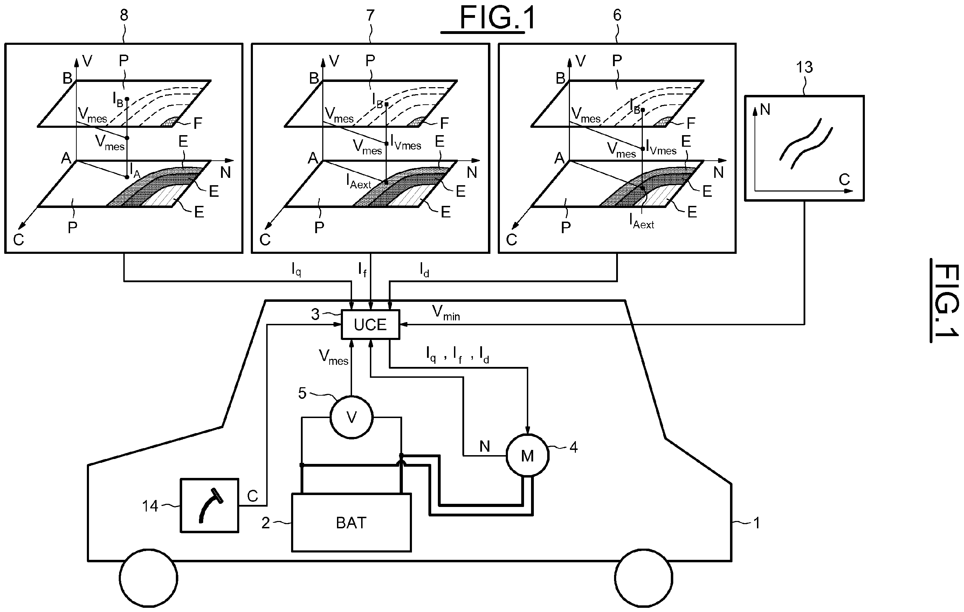

Tel qu'illustré sur la figure 1, un véhicule 1, par exemple un véhicule à propulsion électrique ou un véhicule à propulsion hybride, comprend un moteur électrique 4 alimenté par une batterie 2. Le courant aux bornes de la batterie est mesuré par un voltmètre 5 qui envoie la valeur mesurée $V_{mes}$ vers une unité de commande électronique 3. L'unité de commande électronique reçoit également d'autres données d'entrée, parmi lesquelles la vitesse -ou régime de rotation- N du moteur électrique, et un couple de consigne C qui peut par exemple être envoyé à partir d'une pédale d'accélérateur 14.

L'unité de commande électronique 3 envoie des tensions "pwm" vers le moteur 4 (une pour chaque phase, construites à partir des courants de consigne $I_d$, $I_q$, et une pour l'excitation, construite à partir du courant de consigne $I_f$). Les changements de repères permettant de recalculer une consigne de courant variable pour les phases du stator à partir des consignes $I_d$ et $I_q$ sont connus.

Pour élaborer les consignes d'intensité de courant $I_f$, $I_d$, $I_q$, l'unité de commande électronique 3 utilise trois jeux 6, 7 et 8 de cartographies embarquées. Chacun des jeux comporte une série de cartographies en deux dimensions, permettant de lire une valeur d'intensité de consigne, pour un niveau donné A, B ..., de tension V de la batterie 2, dans un plan représentant des valeurs de point de fonctionnement sous forme de couple (N, C) -C étant le couple de consigne du moteur 4, et N étant le régime de rotation du moteur 4-. Lorsque la tension $V_{mes}$ de la batterie n'appartient pas à un des niveaux cartographiés, l'unité de commande électronique 3 effectue, quand c'est possible, une interpolation entre deux niveaux de tension voisins A, B situés de part et d'autre de la tension mesurée $V_{mes}$, par exemple suivant l'équation 1 suivante :

$$I_{Vmes}(N,C) = I_A(N,C) + \frac{V_{mes} - A}{B - A}\left(I_B(N,C) - I_A(N,C)\right) \qquad \text{Equation (1)}$$

L'interpolation de l'équation 1 ne pose pas de problème lorsque le point de fonctionnement (N, C) est un point autorisé dans chacune des cartographies adjacentes, comme illustré par exemple au niveau du jeu de cartographies 8.

Cependant, les différentes cartographies des jeux 6, 7, 8 comportent des zones dont l'utilisation est soumise à des conditions dépendant du statut de la zone. Les cartographies peuvent par exemple comporter des zones autorisées "P", correspondant, dans le plan de coordonnées (N, C), aux faibles valeurs de couple et aux faibles valeurs de vitesse de rotation du moteur 4. Les cartographies comportent en outre des zones "extrapolées" repérées par la lettre "E" : ces zones ne sont pas physiquement accessibles pour la tension de breakpoint associée à la cartographie; des valeurs d'intensité de courant sont tout de même consignées dans la cartographie pour les points de fonctionnement de la zone "E". Ces valeurs cartographiées en zone "E" peuvent servir à effectuer une interpolation avec une autre valeur cartographiée -pour le même point de fonctionnement- en zone permise "P" d'une cartographie de tension supérieure. Une telle interpolation n'est cependant autorisée que si la tension mesurée $V_{mes}$ est suffisamment proche de la cartographie de tension B supérieure, ou, autrement dit, suffisamment éloignée de la cartographie de tension A inférieure. On peut définir une cartographie 13 répertoriant une tension minimale $V_{min}$, en fonction du point de fonctionnement (N, C), et en fonction des différents breakpoints. L'unité de commande électronique 3 n'effectue l'interpolation que si la tension effective de la batterie $V_{mes}$ est supérieure à la tension minimale $V_{min}$ cartographiée pour le breakpoint A et le point de fonctionnement (N, C) considéré. On applique alors l'équation 1 en utilisant comme valeur $I_A$, une valeur $I_{Aext}$ appartenant à une zone extrapolée "E", et une valeur $I_B$ issue d'une zone permise "P" de l'autre cartographie sur laquelle s'appuie l'interpolation, comme illustré par exemple pour les jeux de cartographies 6 et 7.

Typiquement, la tension $V_{min}$ référencée dans la cartographie 13 augmente quand le couple et/ou la vitesse de rotation du point de fonctionnement que l'on souhaite lire augmentent. Certaines cartographies des jeux de cartographie 6, 7, 8 peuvent comporter des zones interdites repérées par la lettre "F". Les points de fonctionnement (N, C) situés dans ces zones interdites, ne sont pas autorisés en lecture d'une valeur de consigne (à supposer qu'une valeur soit définie dans la cartographie pour ce point de fonctionnement) ni ne sont autorisés pour lire une valeur servant à un calcul d'interpolation. Les valeurs d'intensité de courant des zones interdites "F" des cartographies peuvent ne pas être définies.

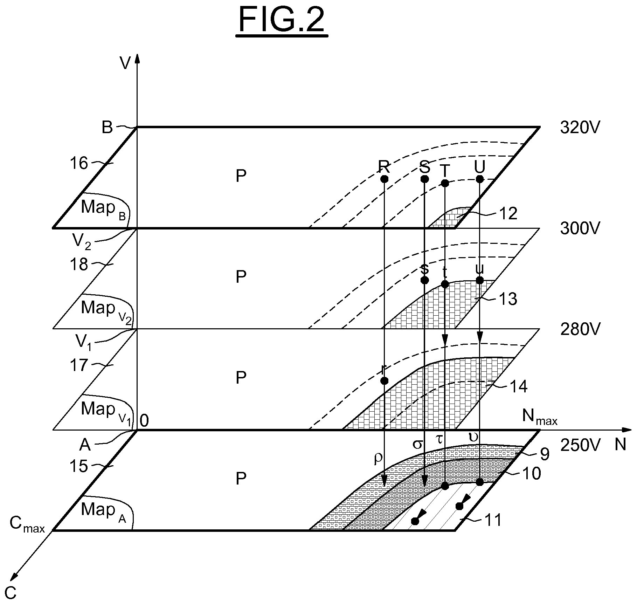

La figure 2 illustre de manière graphique comment sont construites les cartographies embarquées sur le véhicule de la figure 1, pour une des consignes d'intensité de courant $I_f$, $I_d$, ou $I_q$. On retrouve sur la figure 2 des éléments communs à la figure 1, les mêmes éléments étant désignés par les mêmes références.

Sur la figure 2 sont représentées schématiquement deux cartographies 15 et 16 correspondant à des cartographies destinées à être embarquées sur le véhicule, et deux cartographies 17 et 18 qui ne sont et ne seront pas embarquées sur le véhicule.

Chacune des cartographies couvre un même domaine de points de fonctionnement du moteur, qui est ici représenté entre zéro et un couple $C_{max}$, et entre zéro et une vitesse de rotation $N_{max}$. En pratique, le domaine de points de fonctionnement du moteur peut typiquement s'étaler entre deux valeurs extrêmes de couple comprises par exemple entre un couple $-C_{max}$ et un couple $+C_{max}$ et une amplitude de vitesse de rotation du moteur comprise entre 0 et une vitesse de rotation $N_{max}$.

Les deux cartographies embarquées 15 (aussi désignée par Map$_A$) et 16 (aussi désignée par Map$_B$) correspondent respectivement à des niveaux A et B de tension de batterie. Les cartographies non embarquées 17 (aussi désignée par Map$_{V1}$) et 18 (aussi désignée par Map$_{V2}$) correspondent respectivement à des niveaux $V_1$ et $V_2$ de tension de batterie. Les cartographies 15 et 16 peuvent par exemple toutes les deux appartenir au premier jeu de cartographies 6, toutes les deux appartenir au second jeu de cartographies 7, ou toutes les deux appartenir au troisième jeu de cartographies 8 de la figure 1.

Les zones autorisées P des cartographies 15, 16, 17, 18 ont été élaborées suivant une méthode commune. Par exemple, ces cartographies Map$_A$, Map$_B$, Map$_{V1}$, Map$_{V2}$ peuvent être issues d'un même algorithme de calcul à l'aide d'un modèle physique représentant le fonctionnement du moteur 4 et de la batterie 2. Les cartographies 16, 17, 18 comportent ici des zones 12, 13, 14 interdites, qui ne peuvent être utilisées pour y lire directement une valeur de consigne d'intensité de courant. La cartographie 15 comporte des zones extrapolées 9, 10, 11, qui se trouvent dans une domaine de points de fonctionnements (N, C) également interdit à la lecture directe d'une consigne d'intensité de courant. Les valeurs d'intensité de courant enregistrées dans ces zones extrapolées sont calculées par extrapolation à partir de valeurs disponibles dans les cartographies voisines 16, 17, 18, dont au moins une valeur prise dans la cartographie embarquée 16. Les valeurs ainsi extrapolées ne seront pas utilisées comme valeurs de consigne pour la tension A de la batterie, mais seront utilisées pour calculer des valeurs interpolées de consigne d'intensité de courant, pour des valeurs de tension comprises entre la tension A et la tension B. On remplace ainsi une cartographie 15 comportant initialement une zone interdite de lecture, par une cartographie embarquée, dont les mêmes zones proposent des valeurs utilisables pour des calculs par interpolation à des tensions supérieures à la tension A associée à la cartographie 15.

La plage 9 de points de fonctionnement est ainsi non accessible physiquement à la tension A, mais est cartographiée comme zone autorisée à la fois dans la cartographie embarquée 16 et dans les cartographies intermédiaires non embarquées 17 et 18. La plage 10 de points de fonctionnement est accessible à la tension $V_2$ et à la tension B, mais n'est pas accessible à la tension $V_1$. La plage de point de fonctionnement 11 n'est accessible ni à la tension $V_1$ ni à la tension $V_2$. Certains des points correspondant à la plage 11 peuvent être accessibles à la tension B, d'autres non.

Les valeurs cartographiées correspondant à des points de fonctionnement appartenant aux plages 9 ou 10, sont calculées par extrapolation linéaire à partir d'un point cartographié dans une zone autorisée P de la cartographie 16 et d'un point cartographié dans une zone autorisée P d'une des autres cartographies intermédiaires non embarquées 17 ou 18. De manière générale, on construit les zones extrapolées d'au moins certaines des cartographies "incomplètes" (i.e. comportant initialement des zones interdites), à partir des zones autorisées d'une cartographie embarquée, et des zones autorisées de cartographies intermédiaires (non embarquées). Les zones autorisées des cartographies intermédiaires (non embarquées) doivent bien sûr être plus étendues que celles de la cartographie à compléter. Dans l'application particulière où les cartographies représentent une intensité de courant de consigne en fonction du couple du moteur et de la vitesse de rotation du moteur, pour différents niveaux de tension de la batterie, on complète les zones extrapolées des cartographies de tensions inférieures à partir de zones autorisées de cartographies de tensions de batterie supérieures.

Si un point de fonctionnement (N, C) d'une des plages 9 ou 10 est cartographié en zone autorisée "P" dans la cartographie embarquée Map$_B$ et dans une cartographie intermédiaire par exemple Map$_{Vk}$, on peut calculer une valeur fictive de consigne d'intensité de courant $I_{Aext}$ suivant la formule d'extrapolation linéaire suivante :

$$I_{Aext}(N,C) = f\big[I_{V_k}(N,C), I_B(N,C)\big]$$
$$= I_{V_k}(N,C) - \frac{I_B(N,C) - I_{V_k}(N,C)}{B - V_k}(V_k - A) \qquad \text{Equation (2)}$$

Où :

A, B, $V_k$ sont les tensions associées respectivement aux cartographies $Map_A$, $Map_B$, $Map_{Vk}$,
$I_B$ et $I_{Vk}$ sont les consignes d'intensité de courant lues respectivement dans les cartographies $Map_B$ et $Map_{Vk}$ pour le même point de fonctionnement.

On pourrait éventuellement utiliser d'autres types d'extrapolation, à condition que les formules d'interpolation utilisées lors de la lecture des cartographies permettent de retrouver les valeurs initialement lues dans les cartographies 17 et 18.

Sur l'intervalle de tension A, B, lors des interpolations concernant des points d'une des plages 9, 10 ou 11, on souhaite une meilleure précision des valeurs interpolées pour les valeurs de faible tension de batterie par rapport au cas où l'invention n'est pas appliquée.

En d'autres termes, si un point de fonctionnement est « disponible » dans la cartographie intermédiaire (non embarquée) la plus proche, ici $Map_{V1}$, l'extrapolation se fait entre un point de la cartographie embarquée $Map_B$ et un point de la cartographie la plus proche $Map_{V1}$. Sinon, on recherche parmi les cartographies intermédiaires disponibles, la cartographie la plus proche dans laquelle le point de fonctionnement considéré est cartographié. Ainsi, sur l'exemple illustré en figure 2, un point $\rho$ concernant un premier point de fonctionnement de la plage 9 est extrapolé à partir d'un point r de la cartographie intermédiaire $Map_{V1}$ et d'un point R de la cartographie embarquée $Map_B$. Un point $\sigma$ correspondant à un point de fonctionnement de la plage 10 est extrapolé à partir d'un point s appartenant à la cartographie intermédiaire $Map_{V2}$, ce point de fonctionnement n'étant pas disponible dans la cartographie $Map_{V1}$, et d'un point S de la cartographie $Map_B$. Deux points $\tau$, respectivement $\upsilon$, appartenant à la frontière entre les plages 10 et 11 sont cartographiés à partir d'un point T de la cartographie $Map_B$ et d'un point t en limite de domaine autorisé de la cartographie $Map_{V2}$, respectivement d'un point U appartenant à la cartographie $Map_B$ et un point u appartenant à la cartographie $Map_{V2}$.

Les points ainsi extrapolés $\tau$ et $\upsilon$ appartiennent à la frontière entre les plages 10 et 11. Pour les points intérieurs à la plage 11, on ne dispose pas de points sur les cartographies intermédiaires 17 ou 18 pouvant servir à effectuer une extrapolation.

Afin de pouvoir tout de même effectuer des interpolations entre la plage 11 et la cartographie $Map_B$, on attribue aux points de fonctionnement de la plage 11, de manière arbitraire, des valeurs d'intensité de courant identiques à celles d'un point de fonctionnement ayant au moins une coordonnée commune N ou C avec le point à extrapoler, et se trouvant sur la frontière des plages 10 et 11.

On peut par exemple attribuer une même valeur de consigne d'intensité de courant dans la plage 11 à tous les points ayant une même coordonnée N de vitesse de rotation du moteur. On rappelle bien sûr que ces points ne sont pas utilisés directement comme valeurs de consigne mais uniquement pour effectuer ces interpolations à certaines tensions autorisées par la cartographie 13 de la figure 1.

De même que l'on a "complété" la cartographie 15, on peut attribuer des valeurs fictives de consignes d'intensité de courant à des points de la cartographie 16 qui se trouvent, suite au calcul de modélisation initial, dans une zone interdite 12 de la cartographie. Les zones interdites 13 de la cartographie $Map_{V2}$ et 14 de la cartographie $Map_{V1}$ n'ont pas lieu à être complétées puisque ces cartographies ne sont pas présentes sur le véhicule.

Par la suite, les cartographies "complétées" 15 et 16, ainsi que d'autres cartographies, complétées ou non, correspondant à des tensions supérieures à B, sont embarquées sur le véhicule 1. Lorsque l'unité de commande électronique 3 doit délivrer une valeur d'intensité de courant de consigne à une tension intermédiaire aux tensions A et B, elle effectue une interpolation si le point de fonctionnement correspondant appartient aux plages autorisées à la fois de la cartographie $Map_B$ et de la cartographie $Map_A$. Lorsque le point de fonctionnement en cours de calcul appartient à une plage autorisée de la cartographie $Map_B$ et appartient à une plage extrapolée 9, 10 ou 11 de la cartographie $Map_A$, l'unité de commande électronique 3 vérifie d'abord, en utilisant la cartographie 13, si une interpolation est permise pour la valeur de tension considérée. Si l'interpolation est permise, alors l'unité de commande électronique 3 effectue une interpolation entre la valeur en zone autorisée de la cartographie $Map_B$ et la valeur en zone extrapolée de la cartographie $Map_A$.

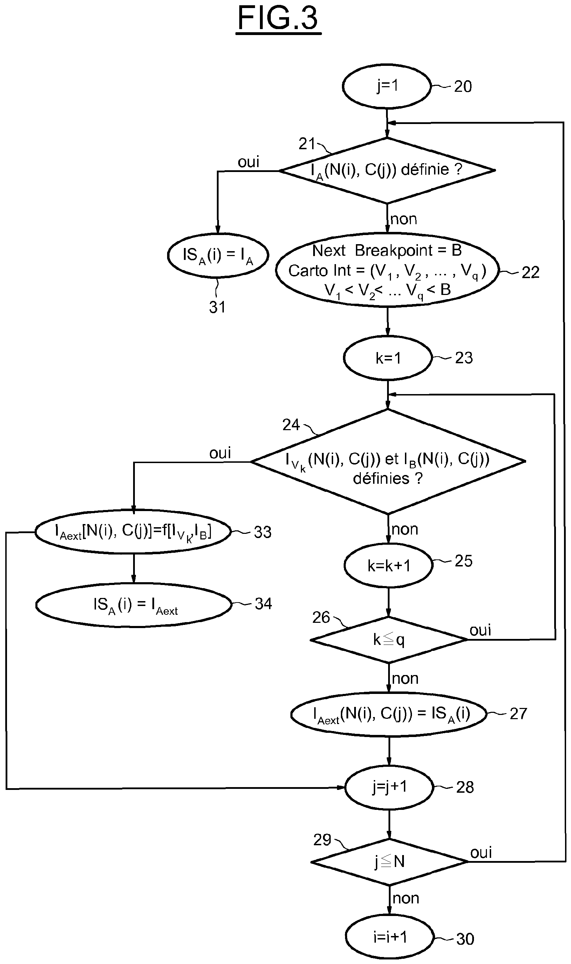

La figure 3 illustre de manière schématique un exemple d'algorithme de construction des valeurs associées aux plages 9, 10 11 de la cartographie embarquée 15- ou $Map_A$-. Le même raisonnement peut être utilisé pour des cartographies de tension supérieure. De manière générale, on "complète" les cartographies à partir de la cartographie embarquée de tension la plus basse, et on "complète" éventuellement par la suite des plages interdites des cartographies embarquées de tension supérieure.

Sur la figure 3, on considère que les couples C de consigne du moteur sont discrétisés suivant un indice j, et les vitesses N de rotation du moteur sont discrétisées selon un indice i.

La figure 3 n'illustre qu'une partie de l'algorithme, à savoir le balayage "en j" du domaine des points de fonctionnement (N(i), C(j)) du moteur, pour une valeur constante N(i). Le balayage se fait en incrémentant l'indice j de manière à se déplacer d'une région du plan (N, C) correspondant à une zone autorisée de la cartographie - typiquement les couples de valeur absolue proche de zéro-, vers une extrémité du plan pouvant comporter des zones initialement interdites de la cartographie -typiquement des couples fortement positifs ou fortement négatifs.

A une étape 20 initiale, on se place sur un des axes de la cartographie correspondant à un indice du calcul j=1. A une étape 21 ultérieure, on effectue un test pour savoir si une valeur d'intensité de courant $I_A$ correspondant au couple du point de fonctionnement actuel (N(i),C(j)) est définie dans la cartographie 15 associée à la valeur de tension A de la batterie.

Si cette valeur $I_A$ est définie, autrement dit si on se trouve dans un domaine autorisé de la cartographie 15, alors, à une étape 31, on enregistre une valeur par défaut d'intensité de courant $IS_A(i)$ comme étant égale à la valeur courante $I_A$.

Si on se trouve dans l'une des plages 9, 10 ou 11 initialement non autorisées sur la cartographie 15, le test 21 nous renvoie vers une étape 22 où l'on répertorie :

- la tension B de la cartographie embarquée 16 la plus proche de tension supérieure à A; la tension B est considérée comme le "breakpoint" suivant A ;
- les valeurs de tensions $V_1$, $V_2$, ...$V_q$ pour lesquelles on dispose de cartographies entre les tensions A et B. Les cartographies prises en compte appartiennent à une famille de cartographies obtenues par un même procédé que les cartographies 15 et 16, mais ne sont pas destinées à être embarquées sur le véhicule.

On classe les tensions $V_1$, $V_2$... jusqu'à $V_q$ par ordre croissant. Ces tensions sont bien sûr toutes inférieures à la tension B.

On initialise à 1 un compteur k à une étape 23, puis on effectue un test 24 pour savoir si, dans la cartographie la plus proche de la cartographie 15, une intensité de consigne $I_{Vk}$ est définie pour le point de fonctionnement (N(i), C(j)); on vérifie également si une intensité de courant $I_B$ peut être définie pour le même point de fonctionnement dans la cartographie 16. Si ces deux conditions sont vérifiées, à une étape 33, on définit, dans la nouvelle cartographie complétée, une valeur d'intensité de courant de consigne $I_{Aext}$ par extrapolation suivant l'équation (2), en utilisant les valeurs cartographiées dans la cartographie $Map_{Vk}$ et la cartographie 16. On sauvegarde également, à une étape 34, la valeur $I_{Aext}$ ainsi calculée comme étant une nouvelle valeur par défaut $IS_A(i)$ d'intensité de courant de consigne associée à la vitesse de rotation d'indice i.

Si le résultat du test 24 est négatif, à une étape 25 on incrémente le compteur k, à une étape 26 on vérifie qu'il est resté inférieur au compteur maximal q répertorié à l'étape 22, et l'on regarde à nouveau à l'étape 24 si la cartographie suivante $Map_{Vk}$, un peu plus éloignée de la cartographie 15, permet de définir une valeur d'intensité de courant $I_{Vk}$ pour le point de fonctionnement (N(i)C(j)).

On vérifie encore une fois à cette étape 24, que le point de fonctionnement (N(i), C(j)) permet de lire une valeur d'intensité de courant $I_B$ dans la cartographie 16.

Si le compteur k atteint la valeur q sans qu'une valeur d'intensité de courant de consigne n'ait pu être trouvée dans une des cartographies intermédiaires - ou si le point de fonctionnement (N(i), C(j)) est dans une zone interdite de la cartographie 16, alors, à une étape 27, on attribue arbitrairement à la cartographie "complétée", une valeur d'intensité de courant de consigne $I_{Aext}$ égale à la dernière valeur calculée $IS_A(i)$.

Une fois que soit à l'étape 27, soit à l'étape 33, une valeur $I_{Aex}$ a été attribuée au point de fonctionnement (N(i), C(j)), à une étape 28 on incrémente le compteur j et on passe à une valeur suivante de couple du moteur. Si l'on est encore à l'intérieur du domaine de points de fonctionnement étudiés (test 29), on réitère le processus à partir de l'étape 21.

Une fois que toute l'amplitude des couples de fonctionnement du moteur a été balayée, on peut passer à l'étape 30 à une autre valeur de vitesse de rotation du moteur.

On peut bien sûr envisager des variantes de fonctionnement où, dans la plage 11 de points de fonctionnement illustrée à la figure 2, l'attribution de valeurs arbitraires d'intensité de courant de consigne se fait à partir d'autres points de la frontière délimitant la plage 11. On pourrait par exemple attribuer une même valeur d'intensité de courant de consigne aux points de la plage 11 correspondant à une même valeur de couple (C(j)) du moteur.

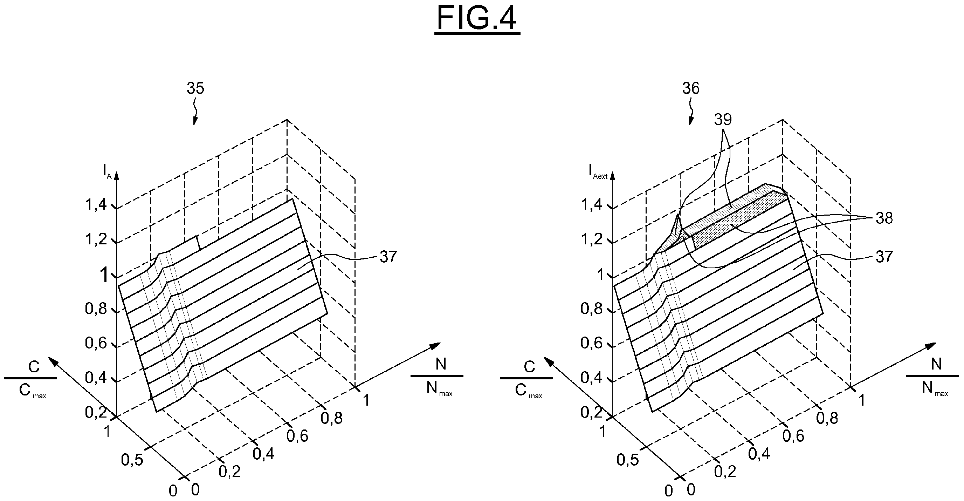

La figure 4 illustre visuellement une portion de cartographie qui pourrait être la cartographie 15, l'axe vertical correspondant cette fois-ci non pas aux différentes tensions prises en compte dans les cartographies mais à la valeur I de courant de consigne cartographiée, I pouvant être une des valeurs If, Id, Iq.

Les axes horizontaux correspondent à des valeurs normalisées respectivement $N/N_{max}$ et $C/C_{max}$ qui représentent respectivement une vitesse de rotation normalisée du moteur et un couple normalisé $C/C_{max}$ du moteur.

On trouve sur la figure 4 une première cartographie 35 correspondant à une cartographie issue par exemple d'un calcul de simulation. La cartographie 35 n'a pas été complétée dans les zones interdites du point de vue du fonctionnement du moteur. La cartographie 36 correspond à une cartographie complétée suivant le processus décrit sur les figures 2 et 3, à partir de la cartographie 35 et des cartographies voisines disponibles issues du même calcul de simulation. Les cartographies 35 et 36 comportent des plages communes 37, représentées en blanc, qui correspondent aux plages accessibles par le moteur au breakpoint de la cartographie considérée. La cartographie 36 comporte en

**EP 2 988 969 B1**

outre des zones 38 qui se trouvent au-delà des frontières permises en termes de couple élevé et de vitesse élevée de rotation du moteur. Ces portions 38 de cartographie se trouvent en continuité avec les portions 37, et sont représentées en hachures très fines. Enfin, pour les valeurs de couple les plus élevées, et aussi pour quelques valeurs de vitesses de rotation approchant une valeur de 1, la cartographie 36 présente des portions 39 assimilables à la plage 11 de la figure 2. Sur ce domaine 39 de points de fonctionnement du moteur, les valeurs d'intensité de consigne $I_{Aext}$ sont dupliquées à partir des valeurs définies sur la frontière entre les plages 38 et 39. La plage 39 est représentée en hachures obliques, et correspond en quelque sorte à une portion de surface extrudée à l'horizontale à partir de la frontière supérieure des régions 38.

L'invention ne se limite pas aux exemples de réalisation décrits et peut se décliner en de nombreuses variantes. On peut envisager de l'utiliser pour des cartographies de valeurs de consigne autres que des consignes d'intensité de courant, ces cartographies étant embarquées à bord du véhicule, présentant des zones interdites de fonctionnement et servant à déterminer des valeurs de consignes en fonction de trois coordonnées. Grâce au système de pilotage du moteur selon l'invention, on ne peut obtenir des couples plus élevés du moteur lorsque la tension de la batterie chute que si le moteur est piloté en effectuant des interpolations à partir de cartographies présentant uniquement des plages autorisées de valeurs et des plages interdites à valeurs indéfinies.

**Revendications**

1. Machine électrique (4) et unité de commande électronique (3) associée comprenant un groupe de cartographies embarquées d'un même paramètre de consigne (I) en fonction d'une première grandeur (N) et d'une seconde grandeur (C) de fonctionnement de la machine, chacune des cartographies étant enregistrée sur le même domaine de variation des deux grandeurs (N, C), chacune des cartographies étant associée à un niveau différent d'un troisième paramètre (V) de fonctionnement de la machine électrique, les cartographies comprenant des plages surfaciques de valeurs ayant au moins deux types de statut différents, soit des plages surfaciques de valeurs autorisées (P), et au moins une plage surfacique (E, 9, 10, 11), pour au moins une des cartographies (15), de valeurs extrapolées, **caractérisée en ce que** l'unité de commande électronique (3) est configurée, quand la valeur ($V_{mes}$) de troisième paramètre est associée à une des cartographies embarquées (15, 16), pour utiliser comme valeur de consigne ($I_d$, $I_f$, $I_q$) des valeurs ($I_A$, $I_B$) appartenant aux plages surfaciques autorisées (P) à l'exclusion des valeurs ($I_{Aext}$) appartenant aux plages surfaciques extrapolées (E), et l'unité de commande électronique (3) est configurée, pour les valeurs du troisième paramètre ($V_{mes}$) non associées à une des cartographies embarquées (15, 16), pour utiliser des valeurs interpolées ($I_{Vmes}$) entre deux valeurs autorisées ($I_B$, $I_A$), ou entre une valeur autorisée ($I_B$) et une valeur extrapolée ($I_{Aext}$).

2. Procédé de pilotage d'une machine électrique (4), à l'aide d'un groupe (6, 7, 8) de cartographies (15, 16) d'un même paramètre de consigne (I) en fonction d'une première grandeur (N) et d'une seconde grandeur (C) définissant un point de fonctionnement (N,C) de la machine électrique (4), chacune des cartographies étant enregistrée sur le même domaine de variation des deux grandeurs, chacune des cartographies étant associée à un niveau différent d'un troisième paramètre (V) de fonctionnement de la machine, dans lequel on interdit l'utilisation d'une portion de surface spécifique ($I_{Aext}$) de valeurs cartographiées de l'une desdites cartographies comme valeurs de consigne, mais on utilise cependant cette portion de surface spécifique ($I_{Aext}$) pour calculer puis utiliser des valeurs de consigne ($I_{Vmes}$) interpolées entre un point de la portion de surface spécifique ($I_{Aext}$) et une seconde valeur ($I_B$) d'une cartographie voisine (16) n'appartenant pas à une des portions de surface spécifiques.

3. Procédé de pilotage selon la revendication 2, dans lequel on définit les cartographies embarquées (15, 16) en sélectionnant un nombre limité de cartographies de référence parmi un jeu plus large de cartographies disponibles (15, 16, 17, 18), dont on complète ou modifie certaines portions (9, 10, 11) pour obtenir ladite portion de surface spécifique, de manière à ce qu'en effectuant par la suite des interpolations entre ladite portion de surface spécifique (9, 10, 11) d'une première cartographie embarquée (15) et une portion non modifiée (P) d'une seconde cartographie embarquée (16), on retrouve au moins une portion (r, s, t, u) d'une des cartographies (17, 18) disponibles non embarquées.

4. Procédé selon la revendication 3, dans lequel on complète au moins une cartographie de référence pour obtenir une cartographie embarquée plus complète (15), en extrapolant, pour chaque point à compléter, à partir des valeurs d'une autre cartographie de référence (16) et d'une autre cartographie non embarquée (18) qui sont respectivement la cartographie de référence et la cartographie non embarquée les plus proches, selon le troisième paramètre (V), de la cartographie à compléter, de manière cependant à ce que le point de fonctionnement (N, C) à compléter soit compris dans une plage de valeurs autorisée de la cartographie non embarquée

**5.** Procédé selon la revendication 4, dans lequel, sur un domaine (11) de points de fonctionnement (N,C) qui ne sont cartographiés dans aucune des cartographies disponibles (17, 18) comprises entre la cartographie embarquée à compléter (15) et la plus proche cartographie embarquée (16), on attribue aux points de fonctionnement du domaine (11) une ou des valeurs virtuelles de consigne ($\tau,\upsilon$) égales à une ou des valeurs de consigne de la même cartographie (15), correspondant à des points de la frontière du domaine (11).

**6.** Procédé selon la revendication 5, dans lequel on complète au moins une zone (11, 39) d'une des cartographies embarquées (15, 36) en traçant une série de lignes de niveau de valeurs constantes à partir de points de la frontière de la zone (11, 39), les lignes de niveau étant parallèles à un axe correspondant à la première grandeur (N, N/N$_{max}$) ou à un axe correspondant à la seconde grandeur (C, C/C$_{max}$).

**7.** Procédé selon l'une quelconque des revendications 2 à 6, dans lequel la première grandeur (N, N/N$_{max}$) et la seconde grandeur (C, C/C$_{max}$) sont proportionnelles à la vitesse de rotation et au couple de la machine électrique, et dans lequel le troisième paramètre (V) est proportionnel à une tension de batterie (2), le paramètre de consigne cartographié (I$_d$, I$_f$, Iq) étant utilisé pour calculer une consigne d'intensité de courant du stator ou du rotor de la machine électrique (4).

**8.** Procédé selon la revendication 7, dans lequel, quand on utilise la portion de surface spécifique de valeurs cartographiées (I$_{Aext}$) pour une interpolation, l'interpolation est effectuée entre une valeur de tension supérieure (B) d'une portion non modifiée (P) de cartographie (16), et une valeur de tension inférieure (A) de la portion de surface spécifique (9, 10, 11) de cartographie (15).

**9.** Procédé selon la revendication 8, dans lequel on n'autorise l'utilisation d'une valeur (I$_{Aext}$) appartenant à la portion de surface spécifique de valeurs cartographiées pour une interpolation, que si la tension (V$_{mes}$) pour laquelle on souhaite déterminer une valeur de consigne est supérieure ou égale à une tension seuil.

**10.** Procédé selon l'une quelconque des revendications 2 à 9, utilisé pour calculer une consigne d'intensité de courant de rotor, une consigne d'intensité de courant direct et/ou une consigne d'intensité de courant de quadrature dans une machine électrique synchrone.

**Patentansprüche**

**1.** Elektrische Maschine (4) und zugehörige elektronische Steuereinheit (3), umfassend eine Gruppe von eingebauten Kartierungen eines selben Sollwertparameters (I) in Abhängigkeit von einer ersten Funktionsgröße (N) und einer zweiten Funktionsgröße (C) der Maschine, wobei jede der Kartierungen auf demselben Variationsgebiet der beiden Größen (N, C) registriert ist, wobei jede der Kartierungen einem unterschiedlichen Niveau eines dritten Funktionsparameters (V) der elektrischen Maschine zugeordnet ist, wobei die Kartierungen Oberflächenwertebereiche umfassen, die mindestens zwei unterschiedliche Statustypen haben, nämlich autorisierte Oberflächenwertebereiche (P) und mindestens einen Oberflächenbereich (E, 9, 10, 11) von extrapolierten Werten für mindestens eine der Kartierungen (15), **dadurch gekennzeichnet, dass** die elektronische Steuereinheit (3), wenn der Wert (V$_{mes}$) eines dritten Parameters einer der eingebauten Kartierungen (15, 16) zugeordnet wird, konfiguriert ist, als Sollwert (I$_d$, I$_f$, I$_q$) Werte (I$_A$, I$_B$) zu verwenden, die den autorisierten Oberflächenbereichen (P) angehören, unter Ausschluss der Werte (I$_{Aext}$), die den extrapolierten Oberflächenbereichen (E) angehören, und die elektronische Steuereinheit (3) für die Werte des dritten Parameters (V$_{mes}$), die nicht einer der eingebauten Kartierungen (15, 16) zugeordnet sind, konfiguriert ist, interpolierte Werte (I$_{Vmes}$) zwischen zwei autorisierten Werten (I$_B$, I$_A$) oder zwischen einem autorisierten Wert (I$_B$) und einem extrapolierten Wert (I$_{Aext}$) zu verwenden.

**2.** Verfahren zur Steuerung einer elektrischen Maschine (4) mit Hilfe einer Gruppe (6, 7, 8) von Kartierungen (15, 16) eines selben Sollwertparameters (I) in Abhängigkeit von einer ersten Größe (N) und einer zweiten Größe (C), die einen Funktionspunkt (N, C) der elektrischen Maschine (4) definieren, wobei jede der Kartierungen auf demselben Variationsgebiet der beiden Größen registriert ist, wobei jede der Kartierungen einem unterschiedlichen Niveau eines dritten Funktionsparameters (V) der Maschine zugeordnet ist, bei dem die Verwendung eines spezifischen Oberflächenabschnitts (I$_{Aext}$) von kartierten Werten einer der Kartierungen als Sollwerte untersagt ist, allerdings dieser spezifische Oberflächenabschnitt (I$_{Aext}$) verwendet wird, um interpolierte Sollwerte (I$_{Vmes}$) zwischen einem Punkt des spezifischen Oberflächenabschnitts (I$_{Aext}$) und einem zweiten Wert (I$_B$) einer benachbarten Kartierung (16), die nicht einem der spezifischen Oberflächenabschnitte angehört, zu berechnen und dann zu verwenden.

3. Steuerungsverfahren nach Anspruch 2, bei dem die eingebauten Kartierungen (15, 16) definiert werden, wobei eine begrenzte Anzahl von Referenzkartierungen unter einer größeren Gesamtheit von verfügbaren Kartierungen (15, 16, 17, 18) ausgewählt wird, bei denen gewisse Abschnitte (9, 10, 11) ergänzt oder verändert werden, um den spezifischen Oberflächenabschnitt zu erhalten, so dass, wenn in der Folge Interpolationen zwischen dem spezifischen Oberflächenabschnitt (9, 10, 11) einer ersten eingebauten Kartierung (15) und einem nicht veränderten Abschnitt (P) einer zweiten eingebauten Kartierung (16) durchgeführt werden, mindestens ein Abschnitt (r, s, t, u) einer der nicht eingebauten verfügbaren Kartierungen (17, 18) wiedergefunden wird.

4. Verfahren nach Anspruch 3, bei dem mindestens eine Referenzkartierung ergänzt wird, um eine vollständigere eingebaute Kartierung (15) zu erhalten, wobei für jeden zu ergänzenden Punkt aus Werten einer anderen Referenzkartierung (16) und einer anderen nicht eingebauten Kartierung (18), die die nächste Referenzkartierung bzw. die nächste nicht eingebaute Kartierung gemäß dem dritten Parameter (V) der zu ergänzenden Kartierung sind, derart extrapoliert wird, dass allerdings der zu ergänzende Funktionspunkt (N, C) in einem autorisierten Wertebereich der nicht eingebauten Kartierung enthalten ist.

5. Verfahren nach Anspruch 4, bei dem auf einem Gebiet (11) von Funktionspunkten (N, C), die in keiner der verfügbaren Kartierungen (17, 18) kartiert sind, die zwischen der zu ergänzenden eingebauten Kartierung (15) und der nächsten eingebauten Kartierung (16) enthalten sind, den Funktionspunkten des Gebiets (11) ein oder mehrere virtuelle Sollwerte ($\tau, \upsilon$) gleich einem oder mehreren Sollwerten derselben Kartografie (15) entsprechend Punkten der Grenze des Gebiets (11) zugeordnet werden.

6. Verfahren nach Anspruch 5, bei dem mindestens eine Zone (11, 39) einer der eingebauten Kartierungen (15, 36) ergänzt wird, wobei eine Reihe von Niveaulinien mit konstanten Werten von Punkten der Grenze der Zone (11, 39) aus gezogen werden, wobei die Niveaulinien zu einer Achse entsprechend der ersten Größe (N, $N/N_{max}$) oder zu einer Achse entsprechend der zweiten Größe (C, $C/C_{max}$) parallel sind.

7. Verfahren nach einem der Ansprüche 2 bis 6, bei dem die erste Größe (N, $N/N_{max}$) und die zweite Größe (C, $C/C_{max}$) zu der Drehgeschwindigkeit und dem Drehmoment der elektrischen Maschine proportional sind, und bei dem der dritte Parameter (V) zu einer Batteriespannung (2) proportional ist, wobei der kartierte Sollwertparameter ($I_d$, $I_f$, $I_q$) verwendet wird, um einen Stromstärkesollwert des Stators oder des Rotors der elektrischen Maschine (4) zu berechnen.

8. Verfahren nach Anspruch 7, bei dem, wenn der spezifische Oberflächenabschnitt von kartierten Werten ($I_{Aext}$) für eine Interpolation verwendet wird, die Interpolation zwischen einem oberen Spannungswert (B) eines nicht veränderten Abschnitts (P) einer Kartierung (16) und einem unteren Spannungswert (A) des spezifischen Oberflächenabschnitts (9, 10, 11) einer Kartierung (15) erfolgt.

9. Verfahren nach Anspruch 8, bei dem die Verwendung eines Werts ($I_{Aext}$), der dem spezifischen Oberflächenabschnitt von kartieren Werten für eine Interpolation angehört, nur gestattet ist, wenn die Spannung ($V_{mes}$), für die ein Sollwert bestimmt werden soll, größer oder gleich einer Grenzspannung ist.

10. Verfahren nach einem der Ansprüche 2 bis 9, das verwendet wird, um einen Stromstärkesollwert eines Rotors, einen direkten Stromstärkesollwert und/oder einen Quadratur-Stromstärkesollwert in einer synchronen elektrischen Maschine zu berechnen.

## Claims

1. Electric machine (4) and associated electronic control unit (3) including a group of embedded maps of the same setpoint parameter (I) as a function of a first operating variable (N) and of a second operating variable (C) of the machine, each of the maps being recorded in the same variation domain of the two parameters (N, C), each of the maps being associated with a different level of a third operating parameter (V) of the electric machine, the maps including areal ranges of values having at least two different types of status, i.e. permitted areal value ranges (P) and, for at least one of the maps (15), at least one areal range (E, 9, 10, 11) of extrapolated values, **characterized in that** the electronic control unit (3) is configured, when the value ($V_{mes}$) of a third parameter is associated with one of the embedded maps (15, 16), to use as a setpoint value ($I_d$, $I_f$, $I_q$) values ($I_A$, $I_B$) belonging to the permitted areal ranges (P) excluding values ($I_{Aext}$) belonging to the extrapolated areal ranges (E), and the electronic control unit (3) is configured, for the values of the third parameter ($V_{mes}$) that are not associated with one of the embedded maps (15, 16), to use values ($I_{Vmes}$) interpolated between two permitted values ($I_B$, $I_A$), or between a permitted value ($I_B$) and an extrapolated value ($I_{Aex}$t).

2. Method of controlling an electric machine (4), with the aid of a group (6, 7, 8) of maps (15, 16) of the same setpoint parameter (I) as a function of a first operating variable (N) and of a second operating variable (C) defining an operating point (N, C) of the electric machine (4), each of the maps being recorded in the same variation domain of the two variables, each of the maps being associated with a different level of a third operating parameter (V) of the machine, wherein the use of a specific area portion ($I_{Aext}$) of mapped values of one of said maps as setpoint values is forbidden, but this specific area portion ($I_{Aext}$) is used, however, to calculate and then to use setpoint values ($I_{Vmes}$) interpolated between a point of the specific area portion ($I_{Aext}$) and a second value ($I_B$) of a neighboring map (16) not belonging to one of the specific area portions.

3. Control method according to Claim 2, wherein the embedded maps (15, 16) are defined by selecting a limited number of reference maps from among a broader set of available maps (15, 16, 17, 18), of which some portions (9, 10, 11) are completed or modified in order to obtain said specific surface portion, so that by subsequently performing interpolations between said specific area portion (9, 10, 11) of a first embedded map (15) and an unmodified portion (P) of a second embedded map (16), at least one portion (r, s, t, u) of one of the non-embedded available maps (17, 18) is retrieved.

4. Method according to Claim 3, wherein at least one reference map is completed to obtain a more complete embedded map (15), by extrapolating, for each point to be completed, from the values of another reference map (16) and another non-embedded map (18), which are respectively the closest reference map and non-embedded map, according to the third parameter (V), of the map to be completed, so that, however, the operating point (N, C) to be completed is included in a permitted value range of the non-embedded map.

5. Method according to Claim 4, wherein, in a domain (11) of operating points (N, C) that are not mapped in any of the available maps (17, 18) included between the embedded map to be completed (15) and the closest embedded map (16), one or more virtual setpoint values ($\tau$, $\upsilon$) equal to one or more setpoint values of the same map (15) corresponding to boundary points of the domain (11) are assigned to the operating points of the domain (11).

6. Method according to Claim 5, wherein at least one zone (11, 39) of one of the embedded maps (15, 36) is completed by drawing a series of level lines of constant values from boundary points of the zone (11, 39), the level lines being parallel to an axis corresponding to the first variable (N, $N/N_{max}$) or to an axis corresponding to the second variable (C, $C/C_{max}$).

7. Method according to any one of Claims 2 to 6, wherein the first variable (N, $N/N_{max}$) and the second variable (C, $C/C_{max}$) are proportional to the rotation speed and torque of the electric machine, and wherein the third parameter (V) is proportional to a battery voltage (2), the mapped setpoint parameter ($I_d$, $I_f$, $I_q$) being used to calculate a current setpoint of the stator or rotor of the electric machine (4).

8. Method according to Claim 7, wherein, when the specific area portion of mapped values ($I_{Aext}$) is used for an interpolation, the interpolation is performed between an upper voltage value (B) of an unmodified portion (P) of map (16), and a lower voltage value (A) of the specific area portion (9, 10, 11) of map (15).

9. Method according to Claim 8, wherein the use of a value ($I_{Aext}$) belonging to the specific area portion of mapped values for an interpolation is permitted only if the voltage ($V_{mes}$) for which it is desired to determine a setpoint value is greater than or equal to a threshold voltage.

10. Method according to any one of Claims 2 to 9, used to calculate a rotor current setpoint, a DC current setpoint and/or a quadrature current setpoint in a synchronous electric machine.

# FIG.1

FIG.2

# FIG.3

$$j=1 \quad \sim 20$$

21 — $I_A(N(i), C(j))$ définie ?

**oui** →

$$IS_A(i) = I_A \quad \sim 31$$

**non**

$$\begin{array}{c} \text{Next Breakpoint} = B \\ \text{Carto Int} = (V_1, V_2, \dots, V_q) \\ V_1 < V_2 < \dots V_q < B \end{array} \quad \sim 22$$

$$k=1 \quad \sim 23$$

24 — $I_{V_k}(N(i), C(j))$ et $I_B(N(i), C(j))$ définies ?

**oui** →

$$I_{Aext}[N(i), C(j)] = f[I_{V_k}, I_B] \quad \sim 33$$

$$IS_A(i) = I_{Aext} \quad \sim 34$$

**non**

$$k=k+1 \quad \sim 25$$

26 — $k \leq q$ → **oui**

**non**

$$I_{Aext}(N(i), C(j)) = IS_A(i) \quad \sim 27$$

$$j=j+1 \quad \sim 28$$

29 — $j \leq N$ → **oui**

**non**

$$i=i+1 \quad \sim 30$$

EP 2 988 969 B1

## FIG.4